# DEMANDE DE BREVET EUROPEEN

(11) **EP 0 948 080 A1**
(43) Date de publication de la demande: **06.10.1999**
(21) Numéro de dépôt: 99200895.3
(22) Date de dépôt: 23.03.1999
(51) Int. Cl.: H01Q 1/24, H01Q 1/10, H04B 1/38, H04M 1/02

(54) **Appareil électronique portable muni d'une antenne**

(30) Priorité: 31.03.1998 FR 9803984
(71) Demandeur: Koninklijke Philips Electronics N.V., 5621 BA Eindhoven (NL)
(72) Inventeur: Flegeo, Arnaud, 75008 Paris (FR)
(74) Mandataire: Pyronnet, Jacques

(57) **Abrégé**

L'appareil est muni d'un boîtier (11) constitué par plusieurs coques et d'une antenne (13) pour au moins la réception d'ondes à radiofréquences, qui comporte des moyens de fixation internes (14, 24) pour l'antenne et au moins une carte à circuit imprimé (12) pour le support et la connexion de composants et/ou d'accessoires dans le boîtier (11).Selon l'invention les moyens de fixation de l'antenne comportent une partie séparée (14) du circuit imprimé et sont rigidement solidaires de la partie intérieure (24) d'une coque (11) constituant une partie du boîtier et que traverse librement au moins la partie inférieure (23) de l'antenne.

Application : téléphone mobile.

## Description

La présente invention concerne un appareil électronique portable, muni d'un boîtier constitué par plusieurs coques et d'une antenne pour, au moins, la réception d'ondes à radiofréquences, qui comporte des moyens de fixation internes pour l'antenne et au moins une carte à circuit imprimé pour le support et la connexion de composants et/ou d'accessoires, dans ledit boîtier.

L'invention s'adresse particulièrement à de petits appareils tels que de petits postes radio ou à des combinés de téléphone sans fil, ces deux produits étant généralement munis d'une antenne dite antenne fouet ou télescopique. L'invention peut aussi s'appliquer à un combiné de téléphone mobile, notamment, dans la technologie selon laquelle l'antenne ne comporte qu'un seul brin, étant mobile entre une position de repos où elle est presque entièrement poussée à l'intérieur du boîtier et une position de fonctionnement en émission-réception où elle est presque entièrement tirée à l'extérieur du boîtier.

Des appareils tels que des radios portables ou des téléphones sans fil font appel à une technologie assez simple ; ils doivent cependant pouvoir résister aux chocs, des chocs sur l'antenne notamment qui peuvent être violemment répercutés, à l'intérieur du boîtier, par l'extrémité cachée de l'antenne sur le support de cette dernière, étant entendu que l'antenne n'est pas montée libre à l'intérieur du boîtier mais qu'elle y est fixée de façon suffisamment rigide pour faire corps avec ce dernier, même lorsqu'elle est déployée.

De façon connue l'antenne peut être supportée par une carte de circuit imprimé qui est elle-même fixée ou calée à l'intérieur du boîtier de façon que le jeu entre cette carte et le boîtier soit réduit au maximum. Pour cela, une pièce métallique en forme d'équerre est fixée par l'une de ses branches au circuit imprimé, au même titre qu'un composant, par des broches solidaires de l'équerre, qui traversent le circuit imprimé et sont soudées à la vague à une piste conductrice pour assurer la nécessaire continuité électrique entre l'antenne et les étages d'entrée ou d'entrée-sortie de l'appareil. La deuxième branche de l'équerre, en direction sensiblement perpendiculaire à la carte de circuit imprimé est percée d'un trou taraudé. Le montage de l'antenne s'effectue par vissage, par son extrémité inférieure amincie et filetée dans le trou taraudé précité. Par ailleurs, l'antenne est maintenue calée dans des directions latérales par rapport au corps de l'appareil, à l'endroit où elle traverse le boîtier. En cas de choc contre l'antenne, suite à une chute, notamment, ce choc est reporté sur la pièce métallique en forme d'équerre servant de base, qui est très rigide, et de là au circuit imprimé lui-même ce qui peut provoquer sa fêlure ou même sa cassure après plusieurs chutes et rendre l'appareil inutilisable. Outre le problème technique lié au choc se pose aussi le problème de devoir approvisionner une pièce additionnelle, à savoir l'équerre métallique qui nécessite un façonnage particulier et des manipulations délicates que l'on souhaiterait pouvoir éviter, lors du montage. On notera que, pour atténuer le premier problème technique qui consiste en la transmission d'un choc sur l'antenne au circuit imprimé dans l'appareil, une solution consisterait à rendre moins rigide la pièce support en remplaçant l'équerre par une lame métallique élastique. Mais cette mesure serait au prix d'une aggravation du deuxième problème indiqué ci-dessus puisqu'elle viserait à compliquer la pièce support additonnelle et son montage.

Selon l'invention les inconvénients de l'art antérieur sont atténués grâce au fait que l'appareil électronique défini au premier paragraphe est remarquable en ce que lesdits moyens de fixation de ladite antenne comportent une partie séparée dudit circuit imprimé et sont solidaires de la partie intérieure d'une coque constituant une partie dudit boîtier et que traverse librement au moins la partie inférieure de l'antenne.

Ainsi, les buts recherchés sont atteints : l'ancrage du pied de l'antenne a été déplacé du circuit imprimé au boîtier de l'appareil et l'élément support additionnel est éliminé, étant remplacé par une partie séparée du circuit imprimé qui est en fait une partie de bord prédécoupée et sécable de ce circuit imprimé, avant montage.

Un mode de réalisation avantageux de l'invention pour une antenne fouet destinée à un poste de radio ou à un téléphone sans fil est remarquable en ce que ledit circuit imprimé comporte une petite partie séparée, mécaniquement dissociée par cassure de sa partie principale restante mais électriquement connectée à ladite partie principale par au moins un conducteur, lesdits moyens de fixation de l'antenne étant constitués par un support appartenant à ladite coque à sa partie intérieure, par ladite partie séparée emprisonnée dans ledit support et par l'extrémité inférieure de l'antenne qui est munie d'un organe de fixation.

On notera que la continuité électrique doit toujours être assurée entre l'antenne et les circuits électroniques d'entrée-sortie de l'appareil. Dans ce but, une variante préférée du mode de réalisation indiqué au paragraphe précédent est remarquable en ce que ladite partie séparée du circuit imprimé comporte une plage métallisée reliée audit conducteur, un alésage qui débouche sur ladite partie métallisée, qui est positionné entre deux trous dans ledit support et qui est traversé avec auto-taraudage par l'extrémité inférieure filetée de l'antenne constituant ledit organe de fixation, et de façon telle qu'un épaulement de l'extrémité inférieure de l'antenne soit en contact serré contre ladite partie métallisée de ladite partie séparée.

Dans cette dernière version de l'appareil, l'antenne n'est pas fermement solidaire de son support en matière plastique qui appartient à la paroi interne d'une coque du boîtier mais elle y est seulement retenue avec un léger jeu, ce qui est suffisant pour son utilisation.

Un appareil de communication émetteur portable, dit encore téléphone mobile, est généralement le fruit d'une technologie un peu différente de celle des téléphones sans fil. Il comporte notamment une antenne à un seul brin protégé par un revêtement en matière plastique, qui coulisse librement à travers un support d'antenne électriquement conducteur, ce support étant fixé à une coque du boîtier à l'endroit d'une traversée renforcée de cette coque.

Un mode de réalisation préféré d'un téléphone mobile selon l'invention est remarquable en ce que ledit circuit imprimé comporte une petite partie séparée, mécaniquement dissociée, par cassure, de sa partie principale restante mais électriquement connectée à ladite partie principale par au moins un conducteur, lesdits moyens de fixation de l'antenne étant constitués par ladite partie séparée du circuit imprimé et par ledit support d'antenne.

Une variante préférée du téléphone mobile selon l'invention est remarquable en ce que ladite partie séparée du circuit imprimé comporte un trou métallisé, relié électriquement à une plage métallisée elle-même reliée audit conducteur et que ledit support d'antenne est fixé à ladite coque du boîtier par pincement de cette dernière à l'endroit de ladite traversée, entre un épaulement extérieur dudit support d'antenne et ladite partie séparée, à l'intérieur, par vissage serré dans le trou métallisé de cette dernière, avec auto-taraudage, l'extrémité inférieure dudit support d'antenne étant filetée à cet effet.

La technologie des téléphones mobiles utilise des circuits imprimés avec trous métallisés, ce qui permet une réalisation simple de l'invention tout en assurant un contact électrique excellent entre une piste conductrice de la partie principale du circuit imprimé et le support d'antenne.

La description qui suit en regard des dessins annexés, le tout donné à titre d'exemple non limitatif, fera bien comprendre comment l'invention peut être réalisée.

La figure 1 représente en coupe et avec arrachement un téléphone sans fil de l'art antérieur: en A vu de face et en B vu de gauche.

La figure 2 représente en A, avec arrachement, un premier circuit imprimé pour la mise en oeuvre de l'invention et en coupe avec arrachement un téléphone sans fil selon l'invention : en B en vue de face, en C en vue de dessous selon la coupe C-C de la figure 2B et en D en vue de gauche selon la coupe D-D de la figure 2B.

La figure 3 représente en A avec arrachement un deuxième circuit imprimé pour la mise en oeuvre de l'invention et en coupe avec arrachement un téléphone mobile: en B vu de face et en C vu de droite selon la coupe C-C de la figure 3B.

Sur les différentes figures les mêmes références représentent les mêmes éléments avec les mêmes fonctions.

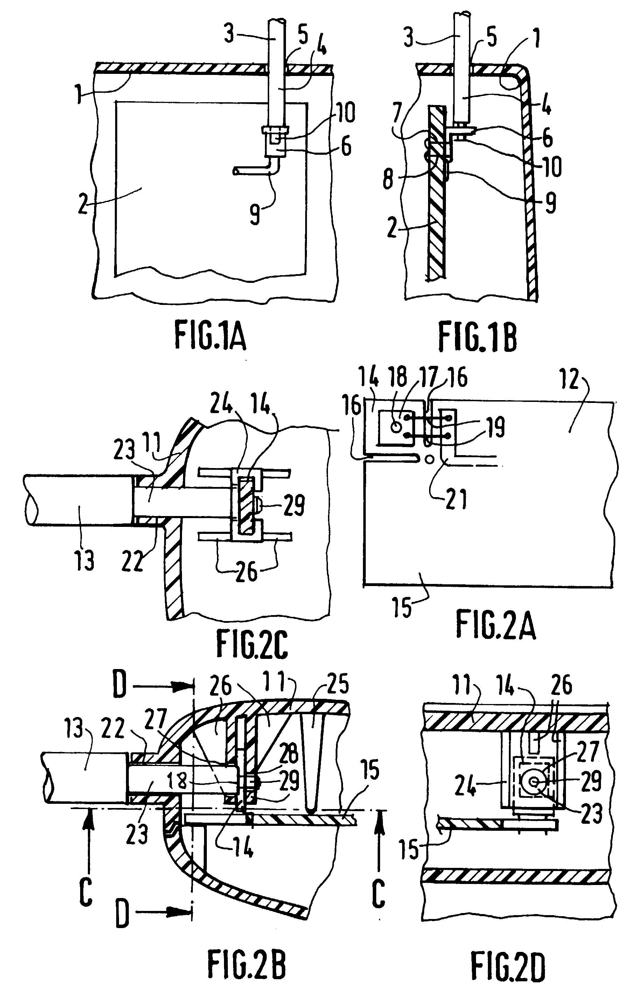

A la figure 1 est représenté schématiquement un téléphone sans fil de l'art antérieur ; il pourrait s'agir aussi d'un petit poste radio sans fil. Le boîtier de l'appareil est représenté par une coque 1 dans laquelle est fixée par tout moyen connu (non représenté) une carte à circuit imprimé 2. Le calage peut être effectué par exemple par vissage de la carte contre l'une des coques ou aussi par simple calage au moyen de nervures prévues à cet effet qui emprisonnent la carte lorsque les coques sont assemblées en place lors du montage de l'appareil. Pour assurer le fonctionnement de l'appareil, il est prévu une antenne fouet 3. Cette antenne, télescopique, est dépliée, en position dite sortie, en vue de l'utilisation de l'appareil et repoussée, en position dite rentrée de façon à ne dépasser que légèrement du boîtier lorsque l'appareil est au repos. Dans les deux positions l'antenne doit faire corps avec l'appareil. Ceci signifie que le premier segment (4), qui est le plus épais et qui est seul visible sur la figure 1, conserve une position fixe, invariable par rapport à l'appareil. A cet effet, le segment 4 de l'antenne est positionné en deux points invariables du sous-ensemble constitué par les éléments réunis 1 et 2 de l'appareil, à savoir un élément fixé au circuit imprimé et un trou de traversée de la coque référencé 5. L'élément de fixation en question est une pièce métallique en forme d'équerre 6. Une branche de l'équerre est appliquée contre le circuit imprimé auquel elle est fixée au moyen de deux broches 7, 8 qui lui sont solidaires, qui traversent la carte de circuit imprimé et sont soudées à la vague du côté opposé, au même titre que d'autres composants électroniques non représentés. L'équerre 6 est en contact électrique avec une piste métallique 9 elle-même reliée (de façon non représentée) au circuit radio d'entrée ou d'entrée-sortie de l'appareil. La partie d'extrémité 10 du segment 4 est amincie et filetée, grâce à quoi l'antenne 3 est vissée dans un trou taraudé de la branche de l'équerre qui est perpendiculaire au circuit imprimé. On obtient ainsi une bonne fixation de l'antenne à l'appareil et une bonne liaison électrique de l'antenne avec le circuit d'entrée (-sortie). Cependant un choc sur l'antenne 3 est directement répercuté sur le circuit imprimé 2, ce qui peut endommager ce dernier. En outre, pour la fixation de l'antenne 3 il faut prévoir la pièce spéciale 6 à fixer sur le circuit imprimé 2.

La figure 2 représente un petit poste de radio ou un téléphone sans fil selon l'invention où la pièce 6 est supprimée et l'antenne 13, qui est une antenne fouet, n'est pas fixée au circuit imprimé mais à une partie intérieure d'une coque 11. Le circuit imprimé 12 de la figure 2A comporte, à un coin, une partie détachable 14 qui a une forme sensiblement carrée et qui est presque entièrement séparée de la partie principale restante 15 par deux fentes 16 qui constituent une pré-découpe. La partie 14 comporte une plage métallisée 17 dans laquelle débouche un alésage 18. Deux conducteurs 19 relient la plage métallique 17 à une plage métallique 21, de la partie principale 15, qui est à son tour reliée à l'étage d'entrée (-sortie), non représenté de l'appareil. La réalisation des éléments 16 à 19 et 21 est effectuée selon la technologie classique bien maîtrisée des circuits imprimés. Avant le montage de la carte à circuit imprimé 12 dans l'appareil, les parties 14 et 15 sont séparées par cassure, par torsion en prenant soin de ne pas briser les conducteurs 19. Ces conducteurs sont par exemple réalisés en bronze phosphoreux afin de pouvoir supporter de fortes déformations.

Si l'on se réfère à la figure 2C on peut noter que la coque 11 possède, de façon connue, un orifice de traversée renforcé 22, que traverse librement la partie inférieure 23, de préférence amincie, de l'antenne 13. D'autre part, la coque 11 comporte, du côté intérieur une excroissance 24 destinée à servir de support pour l'antenne 13. De fait, le support 24 et la partie séparée 14 du circuit imprimé coopèrent pour constituer des moyens de fixation de l'antenne 13. De préférence le support 24 est réalisé par moulage par injection de matière plastique en même temps que la coque 11 ; ce support est creux de façon à pouvoir y loger la partie séparée 14 du circuit imprimé en même temps que la partie principale 12 est maintenue en place par des nervures dans la coque telles que 25, figure 2B. On notera que le support 24 est aussi muni de nervures telles que 26 (visibles sur les figures 2B, 2C et 2D) qui sont des nervures de renfort destinées à encaisser les efforts verticaux exercés par l'antenne. Le support 24 comporte aussi deux trous 27 et 28 situés en regard et au niveau desquels se trouve l'alésage 18 de la partie séparée 14. A son extrémité inférieure amincie 23, l'antenne 13 comporte un bout 29 encore plus mince, fileté, qui constitue un organe de fixation.

Après mise en place des circuits imprimés 14 et 15 dans le boîtier, la fixation de l'antenne 13 est simple : il suffit d'introduire sa partie amincie 23 à travers l'orifice 22 où elle est guidée jusqu'à ce que le bout fileté 29, légèrement chanfreiné, vienne buter contre les bords de l'alésage 18 après avoir traversé librement le trou 27. L'antenne est ensuite vissée, par auto-taraudage, jusqu'à ce que l'épaulement entre les parties d'extrémité 23 et 29 vienne au contact, avec serrage, de la plage métallisée 17. On obtient ainsi une bonne liaison électrique et mécanique de l'antenne 13 et les chocs sur l'antenne se répercutent sur la coque 11 et non sur la partie principale 15 du circuit imprimé.

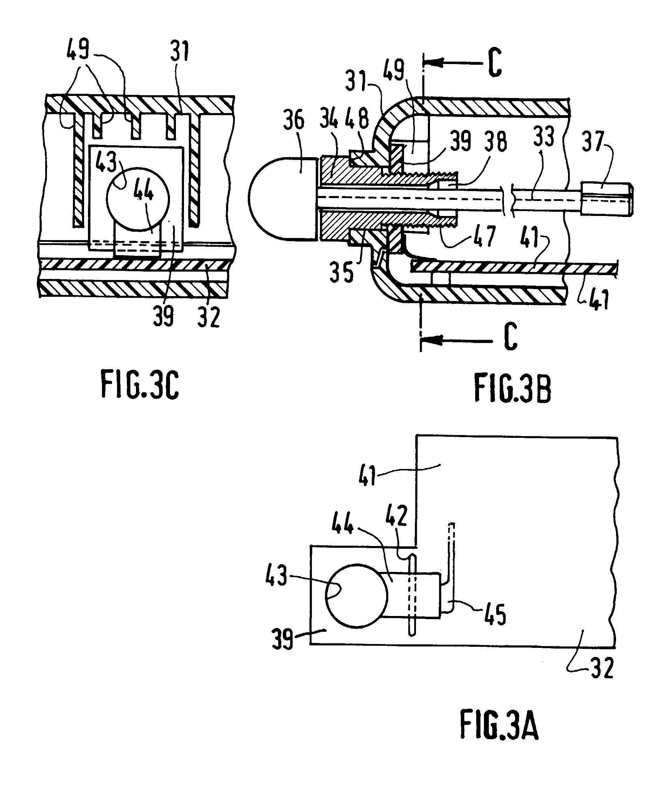

Les figures 3B et 3C représentent un combiné de téléphone portable, dit encore mobile, selon l'invention, et la figure 3A une carte à circuit imprimé particulière qui lui est destinée. Dans l'art connu, la technologie utilisée pour la réalisation de l'antenne est différente de ce qu'elle est pour un téléphone sans fil. Il ne s'agit plus d'une antenne fouet mais d'une antenne à un seul brin 33 qui coulisse librement à travers un support d'antenne métallique 34. Habituellement, le support d'antenne est vissé dans un orifice de traversée renforcé 35, dans la coque 31, de préférence dans une autre pièce métallique filetée (non représentée) elle-même sertie dans l'orifice de traversée renforcé 35. L'antenne proprement dite est maintenue prisonnière, à coulissement, dans le support 34 par une extrémité extérieure isolante large 36 et une extrémité intérieure métallique large 37 qui est en contact électrique avec le brin d'antenne 33. Lorsque l'antenne est tirée pour devenir opérationnelle l'extrémité 37 entre en contact avec frottement dans un logement 38 situé en dessous du support 34 de façon à réaliser à la fois un blocage mécanique et une liaison électrique. Dans l'art connu, la liaison électrique entre le support 34 et une piste conductrice du circuit imprimé 32 est assurée par une pièce métallique rapportée, sur la carte de circuit imprimé, qui est placée de façon à entrer en contact élastique avec le support 34 lors du montage de l'appareil. L'antenne de la figure 3 diffère de cet art connu par la façon dont le support 34 est d'une part, fixé à la coque 31 à l'endroit de l'orifice de traversée 35 et d'autre part, relié électriquement à une piste conductrice de la carte à circuit imprimé 32. Ce circuit imprimé 32, représenté à la figure 3A est analogue au circuit 12 de la figure 2A. Il comporte à une extrémité une excroissance 39 qui est séparable par cassure d'une partie principale 41. Pour faciliter la cassure, il est prévu une fente en forme de boutonnière 42 qui sépare presque complètement les parties 39 et 41. Le circuit imprimé utilisé est du type FR4 ou CEM3 qui utilisent des trous métallisés. L'un de ces trous métallisés 43 est pratiqué dans la partie séparable 39 et une tôle conductrice 44 par exemple en cuivre pré-étamé est reliée par une extrémité à la couche de métallisation du trou 43 et par son autre extrémité à une piste conductrice 45 de la partie 41, analogue à la piste 21 de la figure 2A.

Le support d'antenne 34 diffère de celui de l'art antérieur décrit plus haut en ce que son extrémité filetée 47 pénètre librement à travers l'orifice 35 (figure 3B), jusqu'à ce qu'un épaulement 48 vienne en butée contre le bord extérieur de l'orifice de traversée 35. Pour assurer une fixation ferme du support 34 à la coque 31, le support est vissé, par auto-taraudage dans le trou métallisé 43 de la partie 39 du circuit imprimé, préalablement séparée de la partie 41 par cassure, lors du montage de l'appareil. Pour éviter que la partie séparée 39 soit entraînée en rotation lors de ce vissage, il est prévu des nervures de mise en place et de maintien 49 à la figure 3C (où l'antenne n'a pas été représentée). La partie séparée 39 joue ainsi le rôle d'un écrou de serrage pour le support 34 qui est assimilable à un boulon, ces deux éléments constituant les moyens de fixation de l'antenne. On obtient ainsi, à peu de frais, une excellente fixation de l'antenne à la coque 31 associée à une bonne continuité pour le contact électrique entre le brin 33 de l'antenne et la piste 45 du circuit imprimé, par l'intermédiaire des éléments 37, 34, 43 et 44.

On notera que, pour les deux modes de réalisation de l'invention des figures 2 et 3, décrits ci-dessus, la partie séparée et la partie principale de la carte de circuit imprimé se retrouvent, après cassure et montage dans des plans sensiblement perpendiculaires.

En ce qui concerne le mode de réalisation de la figure 2, une variante (non représentée) consiste à utiliser un circuit imprimé dans lequel on puisse réaliser des trous métallisés. Si le trou 18 est métallisé (figure 2A) la réalisation du support 24 peut être simplifiée du fait de ne comporter qu'une seule cloison avec un orifice que traverse librement le bout fileté 29 de l'antenne. Après vissage de cette dernière dans la partie séparée 14 du circuit imprimé, ladite cloison se retrouve pincée entre la partie 14 faisant office d'écrou et un épaulement de l'extrémité 23 de l'antenne faisant office de boulon.

## Revendications

1. Appareil électronique portable, muni d'un boîtier constitué par plusieurs coques et d'une antenne pour, au moins, la réception d'ondes à radiofréquences, qui comporte des moyens de fixation internes pour l'antenne et au moins une carte à circuit imprimé pour le support et la connexion de composants et/ou d'accessoires, dans ledit boîtier, caractérisé en ce que lesdits moyens de fixation de ladite antenne comportent une partie séparée dudit circuit imprimé et sont solidaires de la partie intérieure d'une coque constituant une partie dudit boîtier et que traverse librement au moins la partie inférieure de l'antenne.

2. Appareil électronique portable selon la revendication 1, muni d'une antenne fouet, caractérisé en ce que ledit circuit imprimé comporte une petite partie séparée, mécaniquement dissociée par cassure de sa partie principale restante mais électriquement connectée à ladite partie principale par au moins un conducteur, lesdits moyens de fixation de l'antenne étant constitués par un support appartenant à ladite coque à sa partie intérieure, par ladite partie séparée emprisonnée dans ledit support et par l'extrémité inférieure de l'antenne qui est munie d'un organe de fixation.

3. Appareil électronique portable selon la revendication 2 constitué par un appareil de communication émetteur-récepteur sans fil.

4. Appareil de communication sans fil selon la revendication 2 ou 3, caractérisé en ce que ladite partie séparée du circuit imprimé comporte une plage métallisée reliée audit conducteur, un alésage qui débouche sur ladite partie métallisée, qui est positionné entre deux trous dans ledit support et qui est traversé avec auto-taraudage par l'extrémité inférieure filetée de l'antenne constituant ledit organe de fixation, et de façon telle qu'un épaulement de l'extrémité inférieure de l'antenne soit en contact serré contre ladite partie métallisée de ladite partie séparée.

5. Appareil de communication émetteur-récepteur portable, selon la revendication 1, comportant une antenne à un seul brin qui coulisse librement à travers un support d'antenne électriquement conducteur, ce support étant fixé à une coque du boîtier à l'endroit d'une traversée renforcée de cette coque, caractérisé en ce que ledit circuit imprimé comporte une petite partie séparée, mécaniquement dissociée, par cassure, de sa partie principale restante mais électriquement connectée à ladite partie principale par au moins un conducteur, lesdits moyens de fixation de l'antenne étant constitués par ladite partie séparée du circuit imprimé et par ledit support d'antenne.

6. Appareil de communication portable selon la revendication 5, caractérisé en ce que ladite partie séparée du circuit imprimé comporte un trou métallisé, relié électriquement à une plage métallisée elle-même reliée audit conducteur et que ledit support d'antenne est fixé à ladite coque du boîtier par pincement de cette dernière à l'endroit de ladite traversée, entre un épaulement extérieur dudit support d'antenne et ladite partie séparée, à l'intérieur, par vissage serré dans le trou métallisé de cette dernière, avec auto-taraudage, l'extrémité inférieure dudit support d'antenne étant filetée à cet effet.

7. Appareil électronique portable selon l'une des revendications 2 à 6, caractérisé en ce que ladite partie séparée et ladite partie principale restante du circuit imprimé sont électriquement reliées entre elles par une tôle conductrice.

8. Appareil électronique portable selon l'une des revendications 2 à 7, caractérisé en ce que ladite partie séparée et ladite partie principale dudit circuit imprimé s'étendent dans des plans sensiblement perpendiculaires.
